(19)

Europäisches
Patentamt
European
Patent Office
Office européen
des brevets

(11) **EP 4 432 577 A1**

(12) **EUROPEAN PATENT APPLICATION**

(43) Date of publication:
**18.09.2024 Bulletin 2024/38**

(21) Application number: **23162336.4**

(22) Date of filing: **16.03.2023**

(51) International Patent Classification (IPC):
**H04B 7/185** $^{(2006.01)}$

(52) Cooperative Patent Classification (CPC):
**H04B 7/18508**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Rohde & Schwarz GmbH & Co. KG
81671 München (DE)**

(72) Inventor: **BÖGL, Thomas
86179 Augsburg (DE)**

(74) Representative: **Prüfer & Partner mbB
Patentanwälte · Rechtsanwälte
Sohnckestraße 12
81479 München (DE)**

(54) **SYSTEM AND METHOD FOR PROVIDING AIR TRAFFIC CONTROL WITH GLOBAL COVERAGE**

(57) A system (100) for providing air traffic control within a geographic sector (102) to which a predetermined communication frequency in the VHF or UHF range is assigned comprises a plurality of satellites (120) configured for a communication (121) with an aircraft (130) in the geographic sector (120) using an analog modulated RF signal at the predetermined communication frequency. The satellites (120) move in medium earth orbits (MEO) or low earth orbits (LEO). The orbits of the individual satellites (120) are different from each other but have the same ground track (GT) on which the individual satellites (120) move at a distance (ds) from each other. The system (100) is configured in such a way that one of the plurality of satellites (120) is switched active for the communication (121) with the aircraft (130) when it reaches a predetermined position (A), and the satellite (120) active up to then is switched off at the same time, so that at each time, only one satellite (120) is actively transmitting on the predetermined communication frequency assigned to the geographic sector (102).

Fig. 1

**Description**

The present invention relates to a system and a method for providing air traffic control services with global coverage and especially to a system and a method using satellites for providing the air traffic control. More specifically, the present invention relates to a system and a method using a satellite constellation optimized for providing space-based air traffic control with global coverage in the VHF frequency range using analogue amplitude modulation double-sideband transmission.

Air traffic control (ATC) is a service provided by air traffic controllers to the pilots of aircrafts by directing aircrafts and providing support and information. For this purpose, Earth's airspace is divided into flight information regions (FIR) by the International Civil Aviation Organization (ICAO). Each of these flight information regions is serviced by an area control center (ACC), also known as air route traffic control center. A flight information region generally comprises the airspace above a territory of a state in which the area control center is located, or a part thereof. It may also comprise an airspace above international waters. A flight information region may further be divided into sectors.

ATC systems are based on an analog communication between ground stations and aircrafts in the VHF or UHF range. Therein, an analog amplitude modulation of the RF carriers is used. To each sector of a flight information region, a specific communication frequency is assigned.

For international waters, it may happen that a sector of a flight information region cannot be covered by ground stations located in the state which is responsible for the flight information region or cannot be covered by ground stations at all. In this case all aircrafts must be additionally equipped with a special long-range communication equipment. This long-range communication equipment may use either HF (shortwave) installations or satellites. In both cases these long-range communication systems are not using the VHF frequency band and must be available in parallel to the normal VHF equipment.

EP 3 758 253 A1 describes a system and a method for using satellites for providing space-based air traffic control within a geographic sector. The system comprises a plurality of satellites configured to communicate with an aircraft in the geographic sector using an analog modulated RF signal at a communication frequency in the VHF or UHF range assigned to the geographic sector. The satellites move at a distance from each other essentially in the same orbit which is a medium earth orbit or a low earth orbit, for example an equatorial orbit. At each time, only one satellite is actively transmitting on the communication frequency assigned to the geographic sector. For this purpose, one of the plurality of satellites is switched active for the communication with the aircraft when it reaches a predetermined position, and the satellite active up to then is switched off at the same time. With such a system, however, only a limited number of geographic sectors can be served which are near to a ground track of the satellites.

US 6 556 808 B1 describes a satellite communication system that includes a constellation of non-geostationary orbiting satellites following a fixed ground track on Earth and ground terminals having substantially continuous visibility to at least one of the satellites in a single ground track. With such a system, ground terminals need only have an antenna with a single axis of scanning motion because they do not have to scan in two dimensions across the entire space.

It is an object of the present invention to provide a method and a system for providing air traffic control from satellites into any geographic sector located at any position on the globe by using an unmodified standard VHF equipment present in each aircraft without requiring an extra long-range communication equipment or other specific extra communication equipment inside the aircrafts.

The object is achieved by the features of the independent claims. Further developments of the invention are indicated in the dependent claims. Therein, the product claims may also be further restricted by the features of the dependent method claims and vice versa.

According to a first aspect, a system is provided for providing air traffic control within a geographic sector to which a communication frequency in the VHF or UHF range is assigned. The system comprises a plurality of satellites configured for a communication with an aircraft in the geographic sector using an analog modulated RF signal at the predetermined communication frequency. The satellites move in medium earth orbits or low earth orbits. The orbits of the individual satellites are different from each other but have the same ground track on which the individual satellites move at a distance from each other. The system is configured in such a way that one of the plurality of satellites is switched active for the communication with the aircraft when it reaches a predetermined position, and the satellite active up to then is switched off at the same time, so that at each time, only one satellite is actively transmitting on the predetermined communication frequency assigned to the geographic sector.

The geographic sector may for example be a flight information region as defined by the ICAO or one of its sectors. VHF and UHF are frequency ranges internationally standardized by the International Telecommunication Union (ITU) For civilian aeronautical radio navigation service and aeronautical mobile radio communication service a frequency range from 108 to 137 MHz is reserved so that the system preferably operates within that frequency range. For military users frequencies in the VHF band between 137 and 144MHz or in the UHF band between 225 and 400Mhz are used. In general, the system described herein can provide services from space into a geographical area located anywhere on the globe by using analog modulated RF signals.

In an implementation form of the first aspect, a number of revolutions of the satellites around Earth during a sidereal day is selected in a way that the ground track enables providing air traffic control to any geographic sector located anywhere on Earth's surface.

In a further implementation form of the first aspect, the orbits of the satellites are synchronized to Earth's rotation period of one sidereal day for one revolution of Earth. Therein, an orbit period $T_O$ is preferably selected to be

$$T_O = \frac{1sd}{n_r} + \Delta T_O$$

the number of revolutions $n_r$ is an integer and $\Delta T_O$ is a correction term for compensating orbit deviations due to the inhomogeneities in Earth's gravitational field, the solar wind, and the rotation of Earth around the Sun.

In a further implementation form of the first aspect, wherein the right ascensions of the ascending node of the orbits of the satellites are shifted to each other by a predetermined angle, preferably by

$$\Delta RAAN = \frac{360°}{n_s}$$

wherein $n_s$ is the number of satellites.

In a further implementation form of the first aspect, a true anomaly between two successive satellites is shifted by a predetermined angle, preferably by

$$\Delta TA = 360° * \frac{n_r}{n_s}.$$

In a further implementation form of the first aspect, an inclination of the orbits is selected in a way that Earth's polar regions can be serviced, wherein the inclination preferably is 75° or higher, more preferably the inclination is 86.4°.

In a further implementation form of the first aspect, a number and an altitude of the satellites is selected in such a way that at each time, at least one, preferably at least two of the satellites has or have an elevation within a predetermined geographical area in a predefined range a minimum elevation and a maximum elevation, preferably between 5° and 60°.

In a further implementation form of the first aspect, the satellites are equipped with more than one VHF and/or UHF antenna to service at least two geographic sectors in parallel.

In a further implementation form of the first aspect, the VHF and/or UHF antennas are arranged in a symmetrical configuration to illuminate sectors in an identical way independent from the flight direction of the satellites from north to south or from south to north, and/or the VHF and/or UHF antennas are arranged in a configuration which allows the satellites to keep a constant orientation to Earth.

In a further implementation form of the first aspect, the satellites keep a constant orientation to Earth.

In a further implementation form of the first aspect, the satellites further are configured to perform a digital communication, preferably via a VHF Digital Link.

In a further implementation form of the first aspect, the satellites are configured to perform a Doppler pre-compensation by using a shift of the transmit frequency.

In a further implementation form of the first aspect, wherein the Doppler pre-compensation is different between different communication modes.

In a further implementation form of the first aspect, a geographically fixed grid of regions is defined and for each of these regions, only one satellite is actively transmitting, wherein a maximum distance in north-south direction within the regions is equal to the distance between the satellites in flight direction, and/or the size of the regions is adapted to the particular geographical position with respect to latitude, and/or the regions are formed as triangular and/or rectangular areas, and/or the regions are defined relative to the ground track in such a way that an elevation of the satellite actively transmitting to the respective region does not exceed 60°, and/or the regions are defined relative to the ground track in such a way that regions assigned to satellites moving from north to south and regions assigned to satellites moving from south to north form an interdigital structure, and/or the regions are defined in such a way that the regions have different sizes and/or forms for different services, and/or the regions are defined in such a way that regions for use with VDL comprise hexagonal structures.

According to a second aspect, a communication method is provided for providing air traffic control within a geographic sector to which a predetermined communication frequency in the VHF or UHF range is assigned. The method comprises establishing a communication link using an analog modulated RF signal at the predetermined communication frequency between a plurality of satellites and an aircraft in the geographic sector. The satellites move in medium earth orbits or low earth orbits. The orbits of the individual satellites are different from each other but have the same ground track on which the individual satellites move at a distance from each other. One of the plurality of satellites is switched active for the communication with the aircraft when it reaches a predetermined position, and the satellite active up to then is switched off at the same time, so that at each time, only one satellite is actively transmitting on the predetermined communication frequency assigned to the geographic sector.

It is to be understood that an embodiment of the invention can also be any combination of the dependent claims or above implementation forms with the respective or other independent claims or above aspects.

Further features and useful aspects of the invention can be found in the description of exemplary embodiments with reference to the attached drawings.

Fig. 1    shows a schematic side view of an air traffic control system according to an embodiment of the present invention.

Fig. 2    shows a schematic plan view of the air traffic control system of Fig. 1.

Fig. 3    is a diagram explaining a basic principle of the satellite arrangement and movement, wherein Fig. 3a shows segments of satellite orbits and Fig. 3b shows a ground track resulting therefrom on Earth's surface.

Fig. 4    shows a ground track of satellites of the air traffic control system of Fig. 1 on an equirectangular projection of Earth's surface.

Fig. 5    shows the ground track of the satellites of the air traffic control system of Fig. 1 on a plan view of a polar region of Earth.

Fig. 6    shows a schematic perspective view of the air traffic control system of Fig. 1.

Fig. 7    shows an enlarged section of Fig.3 in which areas covered by a satellite are indicated.

In the following, embodiments of the present invention are described with reference to the enclosed drawings.

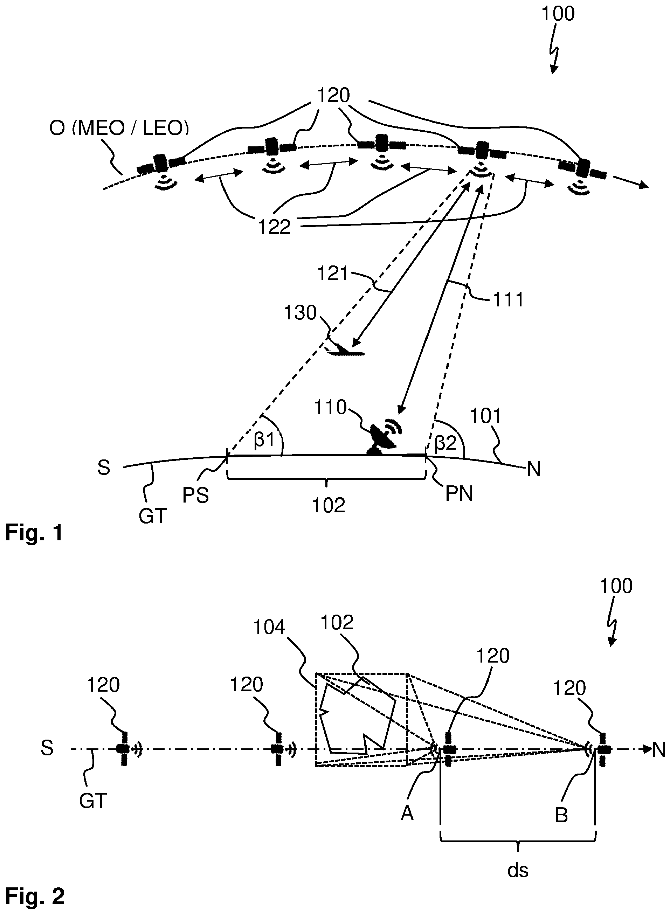

Figs. 1 and 2 show a schematic side view and a schematic plan view of an air traffic control system according to an embodiment of the present invention.

On Earth's surface 101, a geographic sector 102 is defined. This may for example be a flight information region or a sector thereof to which a predetermined communication frequency in a VHF or UHF range is assigned. The air traffic control system 100 comprises one or more ground station(s) 110 and a plurality of satellites 120. It serves for providing traffic control to a plurality of aircrafts 130 (of which only one is shown in the figure) flying above the geographic sector 102. Each of the plurality of aircrafts 130 uses the same predetermined communication frequency that is assigned to the geographic sector 102.

The satellites 120 travel one behind the other at a predetermined altitude above Earth's surface 101, following the same static ground track GT on Earth's surface 101, for example from south S to north N. The ground track GT is the path on Earth's surface 101 directly below the trajectory of a satellite 120. In other words, it is the vertical projection of the satellite's 120 orbit onto the surface 102 of the Earth. The specific arrangement of the satellites 120 is described later in detail.

A supporting link 111 is established between the ground station 110 and at least one of the satellites 120. A communication link 121 is established between the satellite 120 and an aircraft 130, for example an airplane, a helicopter, or the like in the geographic sector 102. Both the supporting link 111 and the communication link 121 preferably are bidirectional. Thus, communication between the ground station 110 and the aircraft 130 is not performed by a direct communication link, but indirectly via the supporting link 111 between the ground station 110 and the satellite 120 and the communication link 121 between the satellite 120 and the aircraft 130.

Above international waters where no ground stations are present, a supporting link 111 may also be realized via inter-satellite links 122 between a satellite 122 having contact to a ground station 110 and a satellite 120 communicating with an aircraft.

The communication link 121 has to fulfil a number of basic conditions because it is required to work with the existing ATC devices installed in aircrafts. That means that there are some predetermined parameters such as the communication using RF signals the VHF and UHF range, especially in a frequency range of about 100 to 400 MHz (corresponding to a wavelength between 0,75 m and 3 m) assigned to air traffic control, and the analog amplitude modulation used for the conventional air traffic control. For such analog waveforms, there are no automatic channel access mechanisms. Further, the number, the orbits, and the distances of the satellites are required to be selected in such a way that at each time, at least one satellite is visible from the aircraft.

In order to ensure a safe line-of-sight communication link 121 between one of the satellites 120 and the aircraft 130 in the entire geographic sector 102, an elevation angle β of a position of the satellite 120 above the horizon has to be in a specific range between βmin and βmax, for example between 5° and 60°, for all the locations within the geographic sector 102. The upper limit is due to the fact that a radiation pattern of an aircraft has a minimum at a radiation angle of 90°. The lower limit is due to the fact that a minimum height of the satellite above the horizon is required for a safe communication link. In the figure, an elevation β1 for the southernmost point PS of the geographic sector 102 and an elevation β2 for the northernmost point PN are shown. The following condition has to be met:

$$\beta min \le \beta 1 \le \beta 2 \le \beta max.$$

From this condition, the time span each satellite 120 is available for communication can be determined depending on the altitude of the satellite. This time span should have a length which is sufficient to enable a reasonable long span of time for the operation of each satellite 120 and thus for a communication between an aircraft 130 and the corresponding satellite 120. Typically, the length of the time span should be in the order of some minutes.

In order to ensure a safe and easy to operate 24 hours / 7 days communication (24/7) between the satellite and the aircraft, the system 100 is configured in such a way that a single satellite 120 covers a specific geographic sector 102 at least over said reasonable long span of time, and that only one satellite 120 is actively transmitting at the predetermined communication frequency assigned to the geographic sector 120 at each time point. Since the same predetermined communication frequency is used for the communication links 121 between the satellite 120 and all the aircrafts 130 within the specific geographic sector 102, frequency switching is not required while the aircrafts 130 remain within the geographic sector 102.

The satellites are arranged in a line at an orbit O which is a medium earth orbit (MEO) or at a low earth orbit (LEO). MEO includes an altitude range above Earth's surface from 2,000 km up to the geosynchronous orbit at 35,786 km while LEO is located below 2000km

The geographic sector 102 to be serviced, e.g. a flight information region or a sector thereof as defined by the ICAO, generally has an irregular shape. A service region 104 serviced by the satellite 120, for example a region in which the signal emitted by the satellite exceeds a predetermined power density, is selected in such a way that the entire geographic sector 102 is included. The fact that also adjacent sectors may thereby be covered by a service region 104 is not of relevance since other communication frequencies are assigned to these sectors.

The form of the service region 104 depends on the directivity of the satellite's antenna. Typically, helical antennas emitting a circularly polarized signal are used. This makes the communication less dependent on the relative position of the satellite and the aircraft with regard to each other. Linear polarization is also usable. For the ease of explanation, the service region 104 is shown in the figure as a rectangle, but the present invention is not limited thereto.

The satellites 120 in a LEO or MEO orbit travel across the geographic sector 102 above the ground track GT, for example from south S to north N. A satellite directly passing across the geographic sector 102 has an elevation up to 90° which may be too high for a reliable communication. However, a satellite approaching the geographic sector 102 as well as a satellite having already passed the geographic sector 102 may be used for a reliable communication.

In the following, the satellite positions A and B are taken into account. Satellite position A is a position in which the satellite 120 has already passed the geographic sector 102 and is sufficiently far away from it so that its elevation within the entire geographic sector 102 is smaller than the maximum permissible elevation βmax. On the other hand, satellite position B is a position in which the satellite 120 has already passed position A, but still is near enough to the geographic sector 102 so that its elevation within the entire geographic sector 102 is greater than the minimum required elevation βmin. Thus, a satellite in position A as well as a satellite in position B can both be used for a communication with aircrafts 130 in the geographic sector 102.

A distance between successive satellites 120 is selected in such a way that it is possible to find satellite positions A and B having the distance ds which fulfill the above conditions. The following timing scheme can then be used:
When a satellite 120 reaches position A, its communication link 121 is switched on. The satellite can then service the entire geographic sector 102 until it reaches position B. At the time it reaches position B, the successive satellite 120 reaches position A. At this time, the communication link of the satellite 120 at position B is switched off, and the communication link 121 of the satellite 120 which now is at position A is switched on. This is repeated every time the active satellite 120 reaches position B and its successive satellite 120 reaches position A.

As indicated above, the positions A and B at which the satellite 120 is switched on or off may as well be positions before the satellite 120 has reached the geographic sector 102.

As an alternative, the ground track GT may also be laterally displaced from the geographic sector 102, for example to the east or west. Depending on the displacement, a sufficiently low elevation of the satellite 120 may also be achieved while the satellite 120 has reached, but not yet passed the geographic sector 102 in the south-north direction. In this case, the positions A and B may as well be located east or west of the geographic sector 102.

In this way, it can be made sure that only one communication link at a time is switched on. Thereby, problems occurring in ATC by interference when two or more satellite transmitters are simultaneously active on the same frequency, such as a different Doppler shifts or different signal delays, can be avoided. Even if these problems may also be overcome by using a different VHF or UHF frequency for each satellite, the aircrafts in that case would not know when to switch between those frequencies.

In the following, a satellite arrangement which enables to provide 24/7 air traffic control to any geographic sector located at any position on the globe is described.

In a celestial coordinate system, i.e. a coordinate system fixed to the stars, the trajectories of the satellites, called satellite tracks or orbits, are circles around Earth's center. These circles can mainly be identified by the following orbital parameters:

- orbit radius (ro) = the radius of the orbit or the distance of the satellite from Earth's center,
- orbital period (To) = the period of time in which the satellite completes a 360° revolution around Earth, i.e. reaches the same position on the orbit again (wherein the orbital period and the orbit radius are correlated to each other),
- inclination (I) = vertical tilt angle of the orbit with respect to Earth's equatorial plane,
- right ascension of the ascending node (RAAN) = longitude of the ascending node where the orbit passes from south to north through the equatorial plane, and
- true anomaly (TA) = the angular position of the satellite on the orbit at a specific time.

Due to Earth's rotation, the ground track GT of a circular orbit O is not a great circle on Earth's surface, but follows a curved path, as will be explained later.

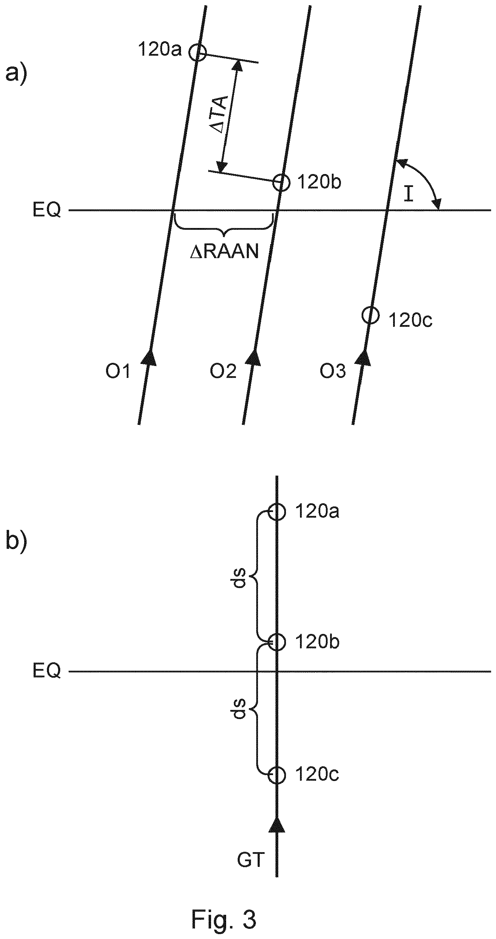

Fig. 3 is a diagram explaining a basic principle of the satellite arrangement and movement. In Fig. 3a, segments of satellite orbits are shown in a celestial coordinate system near the equatorial plane EQ. In Fig. 3b, a ground track resulting from these orbits O on Earth's surface is shown.

Fig. 3a shows three satellites 120a, 120b, 120c moving on three different orbits O1, O2, O3 which have the same inclination I. However, the right ascension of the ascending node RAAN of two adjacent orbits is shifted by ΔRAAN, and the true anomaly TA of two adjacent satellites on their respective orbit is shifted by ΔTA.

Fig. 3b shows a ground track of the satellites 120a, 120b, 120c on Earth's surface in an earthbound coordinate system, i.e. a coordinate system rotating with Earth. If the orbital period To, the right ascension of the ascending node shift ΔRAAN and the true anomaly shift ΔTA are suitably selected, the satellite 120b at a specific time is located at the same position above Earth's surface as the satellite 120a had been located a specific time span before. This is due to the fact that during the time span in which the satellite 120b reaches the same latitude as the satellite 120a had before, Earth has rotated so far that the longitude change achieved thereby corresponds to the right ascension of the ascending node shift ΔRAAN between orbits O1 and O2. Thus, all the satellites have the same ground track on which they follow each other at a distance ds from each other.

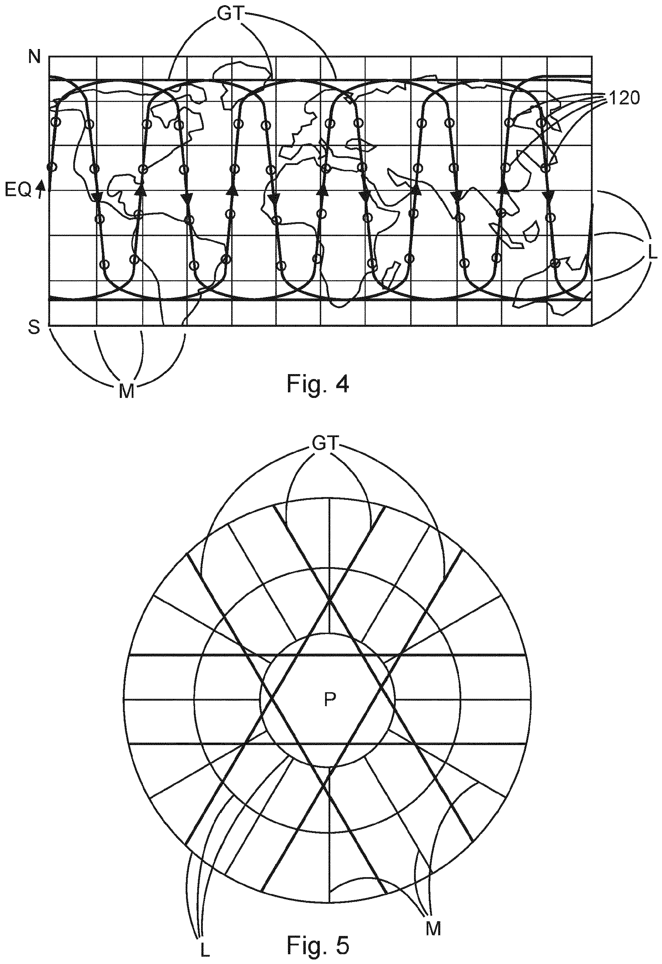

Fig. 4 shows an equirectangular projection of Earth's surface. This projection maps meridians M to vertical straight lines of constant spacing for constant longitude differences and circles of latitude L to horizontal straight lines of constant spacing for latitude longitude differences.

On this rectangular grid, the ground track GT of a satellite 120 of the air traffic control system 100 is indicated. When the satellite 120 orbits the Earth multiple times per day, the ground track GT forms a grid of lines intersecting each other. In the example shown in Fig. 4 for a satellite 120 having a high inclination I, the grid lines intersect each other in the polar region.

If the orbital period $T_o$ is selected in a suitable way, as will be described later, the satellite 120 returns after a day to the same position above Earth. In this case, the ground track forms a closed loop and is static, i.e. it does not change its position on Earth's surface over time.

All the satellites 120 of the air traffic control system 100 are combined to build a cluster. That means that their orbits have a specific relation to each other. Especially, all the orbital parameters for any individual satellite 120 are chosen in a way that the ground track GT of each individual satellite is static on Earth's surface, and that all the satellites have the same static ground track GT on which they move one behind the other at a distance ds from each other. The distance ds therein is meant to be a distance between the projections of the satellites' positions onto the ground track GT, i.e. on Earth's surface, not a distance between the satellite positions in the orbit.

The orbital period To and thus the number of revolutions of the satellite around Earth during a single day is selected in a way that this grid of lines formed by the ground track GT are close enough to each other for enabling air traffic control to any geographic sector 102 located anywhere on Earth's surface 101.

The inclination of the orbits may be chosen to ensure that the satellites are crossing the equatorial plane at a right angle. Due to Earth's rotation, this is not achieved at an inclination of 90°, but at a lower inclination, i.e. with an orbit slightly inclined towards east. In this case, the ground track GT is nearly aligned to Earth's meridians over a wide range of latitude.

Since the satellite orbits are defined with relation to the celestial coordinate system, their synchronization to the Earth's rotation has to be made with relation to the celestial coordinate system. The rotation period for a rotation of Earth by 360° in the celestial coordinate system is called a sidereal day sd. The duration of a sidereal day is given by

$$1sd = 86164.0905\ s \pm \Delta t_{sd} = 23h\ 56\ min\ 4.0905\ s \pm \Delta t_{sd}.$$

The sidereal day thus is about 4 minutes shorter than a solar day which is the time it takes for Sun to pass over the same meridian on consecutive days. The term $\Delta t_{sd}$ designates a deviation by which a sidereal day may deviate from its average value. The magnitude of $\Delta t_{sd}$ is in the order of some milliseconds.

During a sidereal day, each satellite 120 orbits the Earth multiple times. The orbital period $T_O$ is selected to be

$$T_O = \frac{1sd}{n_r} + \Delta T_O$$

wherein $n_r$ is an integer indicating the number of revolutions of the satellite around Earth during a sidereal day and $\Delta T_O$ is a correction term.

If the orbital period To was an integer fraction of a sidereal day, the orbits of the satellites 120 would slowly change due to inhomogeneities in Earth's gravitational field, the solar wind, and the rotation of Earth around the Sun. To compensate this effect, the orbits are monitored. If deviations from the predetermined orbit are indicated, orbit corrections will be performed, resulting in orbital periods To differing from an integer fraction of a sidereal day. These differences $\Delta T_O$ may be in the order of some seconds to some ten seconds.

In a similar way, the orbit radius ro is modified by a correction term $\Delta r_o$ to synchronize the orbit to Earth's rotation.

With this compensation, the satellites 120 will continuously appear after one sidereal day for example at the same crossing point of the ground track GT with the equator EQ having passed $n_r$ revolutions. Thereby, it is made sure that the ground track GT of each individual satellite on Earth's surface is static and does not change over time. This static ground track GT is a closed loop crossing the equator EQ $n_r$ times in the direction from south to north and $n_r$ times in the direction from north to south. In total, the ground track GT has $2 * n_r$ equidistant crossing points with the equatorial plane.

The orbits may have a high inclination to also cover the polar regions of Earth. For this purpose, the inclination should be 75° or higher. Fig. 5 shows the ground track GT of the satellites 120 of the air traffic control system 100 on a plan view of a polar region. Therein, the circles of latitude L are concentric circles around the pole P, and the meridians M extend radially.

The inclination I is selected smaller than 90° so that the ground track repeatedly passes the pole P in a predetermined distance. Even if the individual segments of the ground track GT intersect each other, it is made sure by the satellite arrangement that there always is a sufficient distance between the satellites in the polar region.

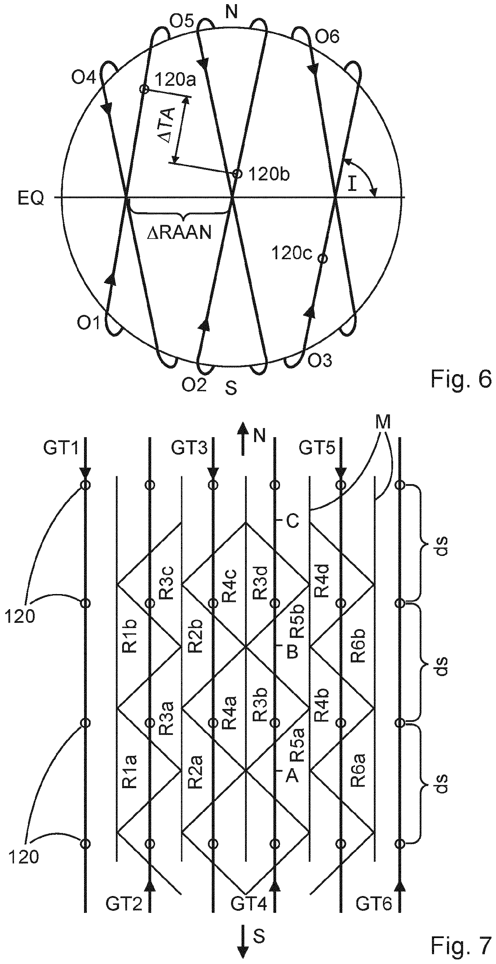

Fig. 6 shows a schematic perspective view of the air traffic control system 100 as seen from space. Similar as Fig. 3a, Fig. 6 shows three satellites 120a, 120b, 120c moving on three different orbits O1, O2, O3 which have the same inclination from south S to north N with a slight tendency towards the east (towards left in Fig. 6). The orbits have a RAAN shift of $\Delta$RAAN, the satellites a TA shift of $\Delta$TA. Three further satellites (not shown in Fig. 6) moving on three further orbits O4, O5, O6 have their RAAN shifted so far that their orbit segments on which they move from south to north lies behind Earth. Fig. 6 shows their orbit segments on which they move from north to south, also with a slight tendency towards the east.

The RAAN of the orbits of two successive satellites is shifted by a predetermined angle, preferably by

$$\Delta RAAN = \frac{360°}{n_s}$$

wherein $n_s$ is the number of satellites. Further, the TA between two successive satellites is shifted by a predetermined angle, preferably by

$$\Delta TA = 360° * \frac{n_r}{n_s}$$

Even if the orbits of all the satellites are different from each other, it can be made sure by these measures that all the satellites have the same static ground track and that they move on this ground track one behind the other at a distance ds from each other. Further, the time difference between two successive satellites reaching the same location on the ground track is made constant by these measures.

Following the same static ground track ensures that all satellites are travelling through Earth's gravitational field within a kind of tunnel where all satellites see identical inhomogeneities over time which leads to identical influences of gravity for all satellites which then keeps the cluster intact by ensuring minimum drifts between the satellites.

The number of satellites is chosen to adjust the distances ds between successive satellites to ensure a 24/7 coverage. The distances ds are set to ensure that each geographical sector or area can be operated at least temporarily by at least two satellites to ensure a seamless switchover from satellite to satellite. If the geographical sector can be operated continuously by at least two satellites, i.e. if at each time, at least two satellites have an elevation in the entire geographical sector which is in a range suitable for a communication with the aircrafts, one of them can be used as the active satellite and the other one(s) can be used as a backup satellite(s) if the active satellite fails.

As a non-limiting example, the constellation of the satellites may be realized using the following parameters:

- number of satellites $n_s$ = 224
- number of revolutions per sidereal day $n_r$ = 14
- orbit radius ro = 7258.62 km + $\Delta r_o$
  (corresponding to an average height above Earth's surface of about 891 km)
- orbital period To = 1sd/14 + $\Delta T_O$ = 6154,58 s + $\Delta T_O$
- inclination I = 86.4°
- RAAN shift between the orbits $\Delta$RAAN =360/224= 1.607° =360/224
- TA shift between two successive satellites $\Delta$TA = 22.5°

This example constellation results in a common static ground track of the satellites that crosses the equator at a right angle 14 times in the direction from south to north and 14 times in the direction from north to south. In total, the ground track has 28 equidistant crossing points through the equatorial plane with a difference of longitude of 12,86°. The time difference between two successive satellites reaching the same location on the ground track is about 6.4 minutes.

For the satellite constellation indicated above, the inclination of 86.4° makes sure that the satellites cross the equatorial plane at a right angle. Thereby, the ground track is nearly aligned to Earth's meridians over a wide range of latitude. This is of advantage for example because some maritime borders of the presently defined flight information regions also are aligned to the meridians.

With a system according to the embodiment described above, it is possible to provide space-based ATC via satellites 24 hours / 7 days for any geographic sector located at any position on the globe without requiring any additional equipment in the aircrafts and without having to modify the existing equipment and/or the procedures used. Further, it is possible to control the ATC for an entire geographic sector from a single ground station so that the use of ground stations of other states or the building of platforms for ground stations on sea is not required for providing ATC above international waters.

Fig. 7 illustrates an example in which way this worldwide ATC may be performed. The figure shows an enlarged section of Fig.3 near the equator. The segments GT1 to GT6 of the ground track GT shown therein are aligned to the meridians and have a constant distance from each other. The satellites 120 travel above the ground track segments GT1 to GT6 at a distance ds from each other. The satellites 120 above the odd numbered ground track segments GT1, GT3, GT5 travel from north to south. The satellites 120 above the even numbered ground track segments GT2, GT4, GT6 travel from south to north.

Earth's surface is seamlessly subdivided in regions R1a to R6b which in the example shown in Fig. 7 form a grid of triangular shape with one side of each triangle being aligned to Earth's meridians.

For the following explanations, ground track segment GT4 is considered. The satellites 120 traveling above this ground track segment provide ATC to the regions R4a to R4d. For this purpose, each satellite 120 is provided with two antennas, one directed towards east and one towards west.

When a satellite 120 traveling northwards reaches position A, it is activated for the communication with aircrafts in the regions R4a and R4b. As soon as it reaches position B, it is switched over for the communication with aircrafts in the regions R4c and R4d. At the same time, the successive satellite 120 reaches position A and is activated for the communication with aircrafts in the regions R4a and R4b. When the first satellite reaches position C, it is switched over for the communication with aircrafts in the next regions (not shown in the figure). At the same time, the second satellite 120 reaches position B and is activated for the communication with aircrafts in the regions R4c and R4d, and the next satellite 120 reaches position A and is activated for the communication with aircrafts in the regions R4a and R4b. This procedure is periodically repeated.

The distances between the positions A and B and between the positions B and C are the same as the distance ds between the satellites 120. In the example described above, it is also the maximum distance within the regions R4a and R4b in north-south direction. With increasing latitude, the spacing between the ground track segments becomes smaller. Consequently, the size of the regions is adapted and also made smaller.

In the same way, satellites 120 traveling northwards above ground tracks GT2 and GT 6 provide ATC to the regions R2a, R2b, R6a, R6b, and satellites 120 traveling southwards above ground tracks GT1, GT3 and GT 5 provide ATC to the regions R1a, R1b, R3a to R3d, R5a, and R5b. Thus, the regions assigned to satellites traveling northwards and the regions assigned to satellites traveling southwards overlap in the east-west direction, thus forming an interdigital structure

Since the regions to which ATC is provided are displaced sidewards from the ground track segments G1 to G6, a maximum elevation βmax is reduced. For the satellite constellation indicated above as an example, the maximum elevation βmax is 47°. Such a low maximum elevation is compliant with the radiation pattern of standard aeronautical antennas used in aircrafts.

The parameters of the satellites antennas and the onboard equipment, among others the transmission power, the receiver sensitivity, the antenna gains, and the alignment of the antennas, is chosen in a way to compensate any inadequacy of the aircraft equipment which enables each aircraft equipped with a standard VHF AM communication system to use the services provides by the system described herein.

The distance of the satellites is chosen in dependence on the line-of-sight visibility range to ensure a seamless global coverage especially at the areas at the equator where adjacent ground track segments have the highest absolute distances.

While the present invention has been illustrated and described in detail in the drawings and the foregoing description, such illustration and description are to be considered illustrative or exemplary and not restrictive. The invention is not limited to the disclosed embodiment. From reading the present disclosure, other modifications will be apparent to a person skilled in the art. Such modifications may involve other features, which are already known in the art and may be used instead of or in addition to features already described herein.

For example, in addition to the frequency assigned to the geographic sector to be serviced, each satellite additionally may be active on an aircraft emergency frequency such as the International Air Distress (IAD) at 121.5 MHz or 243MHz.

Since real flight information regions generally are smaller than the triangles forming the grid, the satellites may be adapted to simultaneously communicate on multiple communication frequencies, thus servicing multiple flight information regions located within the same triangle.

Two (or more) VHF and/or UHF antennas may be arranged at the satellites in a symmetrical configuration to illuminate sectors in an identical way independent from the flight direction of the satellites from north to south or from south to north. Further, the VHF and/or UHF antennas may be arranged in a configuration which allows the satellites to keep a constant orientation to Earth. Thereby, any dynamic attitude control through one orbital period can be avoided. This ensures that the satellites attitude control can be dedicated to maintaining the cluster with respect to altitude, distances inside the cluster and standard orientation down to Earth.

When the satellites keep a constant orientation to Earth, this also allows an inter-satellite link, i.e. a direct communication between the satellites, using antennas with a fixed orientation.

In addition to the voice transmission via an analog modulated signal, the satellites may also be configured for a digital communication with the aircrafts, for example via a VHF Digital Link (VDL).

The satellites may perform a Doppler pre-compensation to compensate the Doppler effect caused by the relative movement between the satellite and an aircraft. This may be done by using a shift of the transmit frequency. The Doppler pre-compensation may be performed in a different way for the different communication modes, for example for analog amplitude modulation or for VDL. Also, the form and size of the regions may be different for different services such as speech transmission and VDL. Regions used for VDL may for example comprise hexagonal structures.

Instead of using a grid of triangular regions, the regions may also be formed as rectangles or in any other shape covering Earth's surface in a seamless way.

## Claims

1. A system (100) for providing air traffic control within a geographic sector (102) to which a predetermined communication frequency in the VHF or UHF range is assigned,

   the system comprising a plurality of satellites (120) configured for a communication (121) with an aircraft (130) in the geographic sector (120) using an analog modulated RF signal at the predetermined communication frequency,
   wherein the satellites (120) move in medium earth orbits (MEO) or low earth orbits (LEO),
   the orbits of the individual satellites (120) are different from each other, but have the same ground track (GT) on which the individual satellites (120) move at a distance (ds) from each other, and
the system (100) is configured in such a way that

one of the plurality of satellites (120) is switched active for the communication (121) with the aircraft (130) when it reaches a predetermined position (A), and
the satellite (120) active up to then is switched off at the same time, so that at each time, only one satellite (120) is actively transmitting on the predetermined communication frequency assigned to the geographic sector (102).

2. The system (100) according to claim 1, wherein a number of revolutions ($n_r$) of the satellite around Earth during a sidereal day is selected in a way that the ground track (GT) enables providing air traffic control to any geographic sector (102) located anywhere on Earth's surface (101).

3. The system (100) according to claim 1 or 2, wherein

the orbits of the satellites 120 are synchronized to Earth's rotation period of one sidereal day for one revolution of Earth,
wherein an orbit period To preferably is selected to be

$$T_O = \frac{1sd}{n_r} + \Delta T_O$$

wherein the number of revolutions ($n_r$) is an integer number and $\Delta T_O$ is a correction term for compensating orbit deviations due to the inhomogeneities in Earth's gravitational field, the solar wind, and the rotation of Earth around the Sun.

4. The system (100) according to one of claims 1 to 3, wherein the right ascensions of the ascending node (RAAR) of the orbits of the satellites (120) are shifted to each other by a predetermined angle, preferably by

$$\Delta RAAN = \frac{360°}{n_s}$$

wherein $n_s$ is the number of satellites.

5. The system (100) according to one of claims 1 to 4, wherein a true anomaly (TA) between two successive satellites (120) is shifted by a predetermined angle, preferably by

$$\Delta TA = 360° * \frac{n_r}{n_s}.$$

6. The system (100) according to one of claims 1 to 5, wherein an inclination of the orbits is selected in a way that Earth's polar regions can be serviced, wherein the inclination preferably is 75° or higher, more preferably the inclination is 86.4°.

7. The system (100) according to one of claims 1 to 6, wherein a number and an altitude of the satellites (120) is selected in such a way that at each time, at least one, preferably at least two of the satellites (120) has or have an elevation (β) within a predetermined geographical area in a predefined range a minimum elevation (βmin) and a maximum elevation (βmax), preferably between 5° and 60°.

8. The system (100) according to one of claims 1 to 7, wherein the satellites (120) are equipped with more than one VHF and/or UHF antenna to service at least two geographic sectors in parallel.

9. The system (100) according to claim 8,

wherein the VHF and/or UHF antennas are arranged in a symmetrical configuration to illuminate sectors in an identical way independent from the flight direction of the satellites (120) from north to south or from south to north, and/or

wherein the VHF and/or UHF antennas are arranged in a configuration which allows the satellites to keep a constant orientation to Earth.

10. The system (100) according to one of claims 1 to 9, wherein the satellites (120) keep a constant orientation to Earth.

11. The system (100) according to one of claims 1 to 10, wherein the satellites (120) further are configured to perform a digital communication, preferably via a VHF Digital Link.

12. The system (100) according to one of claims 1 to 11, wherein the satellites (120) are configured to perform a Doppler pre-compensation by using a shift of the transmit frequency.

13. The system (100) according to claim 12, wherein the Doppler pre-compensation is different between different communication modes.

14. The system (100) according to one of claims 1 to 13, wherein a geographically fixed grid of regions (R1a to R6b) is defined and for each of these regions (R1a to R6b), only one satellite (120) is actively transmitting, wherein

a maximum distance in north-south direction within the regions (R1a to R6b) is equal to the distance (ds) between the satellites in flight direction, and/or

the size of the regions (R1a to R6b) is adapted to the particular geographical position with respect to latitude, and/or

the regions (R1a to R6b) are formed as triangular and/or rectangular areas, and/or

the regions (R1a to R6b) are defined relative to the ground track (GT) in such a way that an elevation ($\beta$) of the satellite (120) actively transmitting to the respective region does not exceed 60°, and/or

the regions (R1a to R6b) are defined relative to the ground track (GT) in such a way that regions (R1a, R1b, R3a to R3d, R5a, R5b) assigned to satellites (120) moving from north to south and regions (R2a, R2b, R4a to R4d, R6a, R6b) assigned to satellites (120) moving from south to north form an interdigital structure, and/or

the regions (R1a to R6b) are defined in such a way that the regions have different sizes and/or forms for different services, and/or

the regions (R1a to R6b) are defined in such a way that regions for use with VDL comprise hexagonal structures.

15. A communication method for providing air traffic control within a geographic sector (102) to which a predetermined communication frequency in the VHF or UHF range is assigned,

wherein the method comprises establishing a communication link (121) between a plurality of satellites (120) and an aircraft (130) in the geographic sector (120) using an analog modulated RF signal at the predetermined communication frequency,

wherein the satellites (120) move in medium earth orbits (MEO) or low earth orbits (LEO),

the orbits of the individual satellites (120) are different from each other, but have the same ground track (GT) on which the individual satellites (120) move at a distance (ds) from each other,

one of the plurality of satellites (120) is switched active for the communication (121) with the aircraft (130) when it reaches a predetermined position (A), and

the satellite (120) active up to then is switched off at the same time, so that at each time, only one satellite (120) is actively transmitting on the predetermined communication frequency assigned to the geographic sector (102).

100

120

O (MEO / LEO)

122

121

111

130

110

101

β1

β2

S

N

PS

102

PN

GT

**Fig. 1**

100

104

102

120

120

120

S

N

GT

A

B

ds

**Fig. 2**

a)

b)

Fig. 3

Fig. 4

Fig. 5

Fig. 6

Fig. 7

Europäisches
Patentamt

European
Patent Office

Office européen
des brevets

# EUROPEAN SEARCH REPORT

Application Number

EP 23 16 2336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 758 253 A1 (ROHDE & SCHWARZ [DE]) 30 December 2020 (2020-12-30) * paragraphs [0001] - [0022] * ----- | 1-15 | INV. H04B7/185 |
| A | US 2021/391921 A1 (COOKE JASON [GB]) 16 December 2021 (2021-12-16) * paragraph [0008] * * paragraphs [0013] - [0020] * ----- | 1-15 | |

**TECHNICAL FIELDS SEARCHED (IPC)**

H04B

The present search report has been drawn up for all claims

| Place of search | Date of completion of the search | Examiner |
|---|---|---|
| The Hague | 4 September 2023 | Dejonghe, Olivier |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 2336

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2023

| Patent document cited in search report | | Publication date | Patent family member(s) | | Publication date |
|---|---|---|---|---|---|
| EP 3758253 | A1 | 30-12-2020 | CN | 112134609 A | 25-12-2020 |
| | | | EP | 3758253 A1 | 30-12-2020 |
| | | | US | 2020403692 A1 | 24-12-2020 |
| US 2021391921 | A1 | 16-12-2021 | EP | 3864770 A1 | 18-08-2021 |
| | | | US | 2021391921 A1 | 16-12-2021 |
| | | | WO | 2020074887 A1 | 16-04-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3758253 A1
- US 6556808 B1